# EUROPEAN PATENT SPECIFICATION

(11) **EP 1 202 641 B1**
(45) Date of publication and mention of the grant of the patent: **01.10.2003**
(21) Application number: 00948089.8
(22) Date of filing: 14.07.2000
(51) Int. Cl.: A23P 1/08, A23L 1/164, A23L 1/39, A21D 2/16, A23C 19/09, A23L 1/22

(54) **LIQUID FOOD SUSPENSION**
FLÜSSIGE NAHRUNGSMITTELSUSPENSION
SUSPENSION ALIMENTAIRE LIQUIDE

(30) Priority: 16.07.1999 GB 9916698
(43) Date of publication of application: 08.05.2002
(73) Proprietor: Kerry Ingredients (UK) Limited, Bristol BS32 4QL (GB)
(72) Inventor: HELLABY, Stephen Richard, Bristol BS3 5PT (GB); PUGH, Jeremy, Gloucester GL52 3PX (GB); FERGYSON, David Russell, Nottingham NG2 5BA (GB)
(74) Representative: Duffy, Assumpta Dympna
(86) International application number: GB0002644
(87) International publication number: WO01005256

(56) References cited:
- EP-A- 0 421 510
- EP-A- 0 518 507
- EP-A- 0 560 609
- GB-A- 1 568 270
- GB-A- 2 093 679
- US-A- 4 375 483
- US-A- 5 362 512
- E. ROBINSON LANG: "Coating Behaviour of Suspensions" JOURNAL OF FOOD SCIENCE., vol. 47, 1981, pages 324-325, XP002151905 CHICAGO US cited in the application

## Description

This invention relates to liquid suspensions of foodstuffs such as sauces, bread improver compositions, coating composition for food items, and more particularly to a flavouring and/or seasoning composition for food items such as snack foods. The invention also relates to food items coated with the compositions and to methods of preparing and using the compositions.

### Background of the Invention

Snack foods such as potato crisps, corn chips and pork scratchings are usually coated with a seasoning and/or flavouring composition in order to render the often bland tasting basic food item palatable. Such coating compositions can consist predominantly of a seasoning such as salt (e.g. in the case of potato crisps) or can have a more complex composition.

The coating behaviour of suspensions is discussed in the paper by E.R Lang & C.K. Rha, *Journal of Food Science,* Vol. 47 (1981), 324-325 which discloses tests carried out on *inter alia* sugar-in-oil suspensions. The authors found that suspensions having a sugar content of 1-30% gave a thicker coating on a glass plate when the sugar was a relatively coarse granulated sugar (446-463 micrometre diameter particles), but that suspensions having a sugar content of 60% gave thicker coatings when powdered sugar (22-31 micrometre diameter) was used.

The behaviour of food suspensions is also discussed (although not in a coating sense) in a number of patents to Procter & Gamble relating to nut pastes, nut spreads and nut butters, see in particular US-A-5693357, US-A-5518755 and WO-A-96/21364. The suspensions disclosed in the aforementioned documents, which contain relatively high concentrations of solids (greater than 50%) and are described as being spreadable, are milled using a high shear milling technique to give monomodal suspensions having carefully controlled particle size distributions.

EP-A-0 021 483 (also to Procter & Gamble) discloses flavour enhancing compositions comprising microfine salts having particle sizes of I to 10 microns.

US-A-4,375,483 (Procter & Gamble) discloses a flavour-enhancing fat composition containing salt, lecithin and a hydrophilic fumed silica. The combination of the salt and lecithin is stated as providing a synergistic improvement of the anti-stick properties of the fat composition.

Coating compositions are typically applied to a food item (e.g. snackfood) by spraying, tumbling or dipping techniques in which the coating is presented as a suspension or powder. A substantial problem with present coatings is that they are often poorly adherent to the food substrate with the result that a substantial proportion of the coating falls off the food substrate thereby clogging up the coating machinery. Not only is this wasteful of materials but, in addition, it is wasteful of time and labour since it is necessary to stop the machinery at regular intervals to clean off the accreted waste coating.

EP-A-0 518 507 (Pauls plc) discloses a method of preparing a flavouring material for application to a snack food base by milling particles of powdered flavouring in oil to a size of less than 20 microns. However, it is stated on page 2 of this document that the use of conventional free-flow agents such as tricalcium phosphate and exploded silica powder is detrimental to the process, tending to cause gelification of the flavouring mixture as a result of the milling step.

It is an object of the invention to overcome or at least substantially alleviate the aforementioned problems and to provide a coating composition which exhibits improved adherence to the food item thereby reducing the frequency with which the machinery used to apply the coating must be cleaned and production halted.

A further object of the invention is to provide a method and composition that are compatible with conventional free-flow agents, for example of the aforementioned type.

Another problem associated with suspensions is that present suspensions are often relatively unstable in the sense that separation and/or sedimentation of the solids takes place after a relatively short time. Consequently, there is a lack of uniformity in the coatings which in turn can lead to taste "hot spots", or spots where there is little or no flavouring at all.

It is thus a still further object of the invention to provide a coating composition in which the flavouring and seasoning agents are spread more evenly over the food item thereby ensuring greater consistency of taste.

The problem of the settling out and sedimentation of food suspensions is also evident in many other areas of food technology, for example in the preparation of sauces (e.g for presentation with cooked food dishes) and hence another object of the invention is to provide a solution to the problems encountered with such other food suspensions .

### Summary of the Invention

It has now been found that by carefully controlling the particle sizes of the solids within the suspension, more stable liquid suspensions can be obtained, such that settling out of the ingredients is arrested or substantially prevented. In the context of coatings for snack foods, this means that the flavouring and/or seasoning agent in the coatings can be applied with much greater consistency and with greatly reduced need to stop production runs to clean the equipment to remove coating material that has failed to adhere to the food item.

Accordingly, in a first aspect, the invention provides a liquid food composition in the form of a suspension of particles of foodstuff in a carrier liquid, excluding sugar-in-oil suspensions and nut pastes and nut butters; the particles having a mean particle size of less than 100 micrometres and a particle size distribution whereby the d[0.5] value is less than 100 micrometres and the d[0.9] value is less than 300 micrometres.

By "sugar-in-oil suspensions" is meant a suspension consisting substantially only of sugar and oil, for example a suspension of the type disclosed in Lang *et al. (idem.).*

The food suspensions of the invention are typically pourable or pumpable suspensions, i.e. suspensions having a viscosity at room temperature or on gentle warming to a temperature of up to about 50 degrees C (e.g. up to 45 degrees C) whereby they can be poured from a receptacle or can be pumped around a liquid transport or distribution system, e.g. through pipework, without the use of excessive pressures.

The compositions of the invention are in the form of suspensions in which, typically, the solids content can be of the order of approximately 15% to 55% (w/w), for example from 20% to 49% (w/w), preferably from 25% to 35%, e.g. approximately 30% (w/w).

The carrier liquid can comprise or consist essentially of water or a mixture with a miscible non-aqueous liquid, or the carrier liquid can be one which is immiscible with water. In one embodiment, the carrier liquid is an oil. The carrier liquid can contain dissolved substances where desired.

Examples of types of food suspensions are functional food suspensions such as drinks (e.g. stimulant suspensions, isotonic/energy drinks, recovery/jet lag cure drinks), sauces (e.g. sauces selected from curry, garlic, bechamel, tomato, cheese, butter, gravy, chocolate, vanilla and lemon sauces), glazes, bouillons, marinades and custards, bread improver suspensions, yield improvers, phosphate suspensions, functional protein suspensions, coating suspensions (e.g. for snackfoods), preservatives, colouring agents and colouring systems, and batters.

In one preferred aspect, the invention provides a coating composition (other than a sugar-in-oil suspension or a nut butter or nut spread) for coating a food item, the coating composition being in the form of a suspension of particles in a carrier oil; the particles having a mean particle size of less than 100 micrometres and a particle size distribution whereby the d[0.5] value is less than 100 micrometres and the d[0.9] value is less than 300 micrometres.

In a particularly preferred embodiment, the invention provides a coating composition (other than a sugar-in-oil suspension or a nut butter or nut spread) for coating a food item (such as a snack food), the coating composition being in the form of a suspension of particles in a carrier oil; the particles having a mean particle size of less than 50 micrometres (for example less than 20 micrometres, preferably less than 15 micrometres) and a particle size distribution whereby the d[0.5] value is preferably less than 20 micrometres, the composition having a solids content of from 20% to 49% (w/w) (preferably from 20% to 35%, for example 25% to 35%), and containing a free-flow enhancing agent.

In another preferred aspect, the invention provides a snackfood item coated with a coating composition as hereinbefore defined.

The term "d[0.5]" as used herein refers to the breadth of the range of particle sizes containing 50% of the particles. Thus, for example, if 50% of the particles are of a size in the range from 20 micrometres to 50 micrometres, the d[0.5] value is 50-20 = 30. Similarly, the terms "d[10]" and "d[90]" refer respectively to the breadths of the particle size ranges containing respectively 10% and 90% of the particles. The d[0.1], d[0.5] and d[0.9] values thus provide a means of determining and defining the particle size distribution in the suspension. It is preferred that the particle size distribution is controlled such that the d[0.5] value is less than 20 micrometres, typically less than 15 micrometres and more preferably less than 10 micrometres. It is also preferred that the d[0.9] value is less than 250 micrometres, for example less than 200 micrometres, preferably less than 50 micrometres. It is further preferred that the d[0.1] value is less than 10 micrometres.

The particle sizes referred to above are the particle sizes that can be measured using the "Mastersizer" laser particle sizer available from Malvem Instruments Ltd, Malvern, UK.

In one preferred embodiment of the invention, the coating composition contains particles having a mean particle size of less than 50 micrometres (for example less than 20 micrometres, preferably less than 15 micrometres) and a particle size distribution such that the d[0.5] value is less than 20 micrometres.

In a more preferred embodiment, the coating composition has a particle size distribution such that the d[0.1] value is less than 8 micrometres (e.g less than 5 micrometres), the d[0.5] value is less than 15 micrometres (e.g. less than 10 micrometres) and the d[0.9] value is less than 25 micrometres (e.g. less than 20 micrometres).

It is preferred that the particle size distribution is monomodal, i.e. the particles have a single size distribution curve, rather than several overlapping size distribution curves. In compositions where the components are comminuted separately before blending and have significantly differing mean particle sizes and size distribution profiles, the size distribution curve of the mixture may show several peaks and/or shoulders. By contrast, in a monomodal suspension, the size distribution curve should take the form of a single gaussian curve with no additional peaks or shoulders. Such monomodal particle distributions can be achieved either by milling the components separately to a desired consistent particle size, or by blending the components and milling the blend or mixture together to the desired size.

By controlling the particle size distribution in the suspension, it has been found that not only are the suspensions much more stable, i.e. they do not separate so readily on standing, but they exhibit greatly improved adhesion characteristics. The improvement in adhesion is believed to arise from the increased viscosity of the suspensions, and it has been found that good adhesion properties result from suspensions having a viscosity in the range from 30 mPas⁻¹ to 200 Mpas⁻¹. The foregoing viscosity figures refer to viscosities measured using a water bath set at 45 degrees C and a Brookfield DV-1 Viscometer having a number 2 spindle rotating at 100 rpm.

In one embodiment of the invention, the coating compositions are intended as coatings for snack food items. Examples of snack food items include food items which are extruded and/or fried and/or baked and/or formed by sheeting and/or reconstituted, and which are formed, for example, from root or tuber crops such as potatoes, cereals such as wheat, non-root crop vegetables and pulses, flours made therefrom or starch extracted therefrom, particular examples being maize flour, semolina or wheat flour, rice or rice flour, peanuts and other nuts.

Particular examples of snack foods are crisps and chips formed from potato and other vegetable and fruits including reconstituted forms thereof, pretzels (e.g. mini-pretzels or pretzel biscuits)), tortilla chips, savoury and sweet biscuits, extruded expanded snack items such as those sold under the trade marks "Wotsits" and "Monster Munch", collets or hoops formed from potato or cereal flour (for example hoops sold under the trade mark "Hula Hoops", unleavened or leavened baked dough products, fried bread snackfoods such as croutons, crusted crouton slices, pork rinds (scratchings) and popcorn.

Where the suspensions of the invention are coating compositions, typically they comprise (or consist essentially of) flavouring or seasoning components and optionally diluents or carriers therefor. The flavouring and seasoning components of the suspensions can comprise any one or more types of ingredient selected from base materials, flavoured base materials, processing aids, acidic base materials, flavours, herbs and spices, flavour enhancers, colours, and artificial sweeteners.

Examples of base materials include sugars such as sucrose, glucose (e.g. dextrose), fructose, lactose and maltose, and sodium chloride.

Flavoured base materials include onion powder, tomato powder, dairy powders such as milk, whey and casein powders, garlic powder, other vegetable powders and cheese powder.

Processing aids include agents intended to improve the properties of the suspensions and to assist the manufacturing process but which do not necessarily impart any flavour to the suspension. Examples include free-flow enhancing agents and humectants/dampening agents, particular examples being oils/glycerides, phosphates and silicas.

In a preferred embodiment, the compositions of the invention contain free-flow enhancing agents such as phosphates, for example calcium phosphates e.g. tricalcium phosphate.

Acidic base materials can be included, for example to create the impression or flavour of a fruit or other acid substance (e.g. to provide a citrus, apple or other fruit background), and examples include acids such as citric, ascorbic, malic, succinic, tartaric and acid salts such as acetates, and citrates.

Examples of flavours are natural flavours (e.g. extracts such as oleoresins), powders, solutions or purees from natural flavouring sources, and flavours that contain topnotes identical or substantially identical to naturally occurring flavours. Particular examples of flavours include cheese, dairy, meat savoury, vegetable, fruit and fish flavours. Synthetic flavours include Maillard reactants and reaction products including Amadori and Heyns rearrangement products and post-rearrangement products.

The seasoning and flavourings can contain one of more of a large number of herbs and spices, for example in fresh, dried, powdered or flaked form, or extracts thereof, and specific examples of herbs and spices include black and white pepper, paprika, chilli, turmeric, cayenne, coriander, ginger, pimento, cinnamon and nutmeg.

Examples of flavour enhancers include yeast-based ingredients such as yeast extracts, and hydrolysed vegetable proteins such as hydrolysed soya protein, and flavour enhancing salts such as monosodium glutamate.

Colouring agents can be included and these can be of either natural or synthetic origin. Examples of colouring agents include caramel, plant derived colouring agents such as anthocyanines, turmeric, paprika and beta-carotene, and non-toxic dyestuffs such as sunset yellow.

In order to lower the calorie content of the coating, or for dental reasons, sweetening can be provided in part or in total by artificial sweeteners such as aspartame, saccharin and acesulfame K, or by naturally occurring non-sugar sweeteners such as glycyrrhizinate.

Salt replacements can also be included if required and examples include potassium chloride and sodium chloride/potassium chloride mixtures).

In order to bulk out the flavouring and seasoning components, one or more diluents or solid carriers can be included, and examples of such diluents and carriers include those comprising or consisting essentially of one or more substances selected from:
(a) proteins, e.g. dairy proteins such as whole and skimmed milk powder, whey powder and whey permeate, and plant derived proteins such as soya protein;
(b) carbohydrates such as sugars, e.g. monosaccharides such as dextrose, or disaccharides such as lactose, starches, modified starches, and maltodextrins
(c) cellulose derivatives such as microcrystalline cellulose, methylcellulose, hydroxypropylmethyl cellulose, carboxymethyl cellulose, and
(d) inert flours and starches, e.g. cereal and potato flours and starches.

In order to impart other desirable properties to the coating compositions, various auxiliary substances can be included. Such auxiliary substances can, for example, be selected from:
(a) acidity regulating agents and buffering agents such as citric, tartaric, malic, ascorbic, succinic, propionic and acetic acids and salts thereof, phosphates (e.g. acidic phosphates and phosphates such as calcium phosphate; and basic and alkaline acidity regulating agents, for example carbonates such as sodium carbonate, bicarbonates such as sodium bicarbonate, and hydroxides such as magnesium hydroxide and calcium hydroxide.
(b) preservatives such as sulphites and metabisulphites; and
(c) antioxidants such as tocopherol, ascorbic acid, herbal extracts such as rosemary and tomato extracts, and beta-carotene; and
(d) vitamins and minerals such as vitamin A, B complex, C, D and E; iron, manganese and calcium.

The compositions of the invention are preferably formulated such that they contain less than 50%, for example less than 20%, preferably less than 10% by weight of particles derived from nuts.

Where the coating compositions of the invention are oil-based suspensions, the oils typically comprise glycerides (e.g. fatty acid triglycerides, diglycerides or monoglycerides or mixtures thereof) in the form of plant oils, animal oils or fish oils and/or blends and derivatives thereof (such as hydrogenated or partially hydrogenated oils).

Examples of plant oils include palm oil, olive oil, corn oil, sesame seed oil, castor oil, canola oil, cottonseed oil, safflower oil, coconut oil, rapeseed oil, sunflower oil, soya bean oil, and other forms of vegetable oil.

Examples of fish oils include herring oil, menhaden oil, cod liver oil and sardine oil.

Examples of animal oils include lard, tallow, mutton fat, beef fat, turkey fat, chicken fat or pork fat.

Vegetable oils are preferred.

The oils can be naturally occurring oils, e.g plant oils, fish oils or animal oils as described above, or they can be wholly or partially synthetic in nature. For example, the oils can be trans-esterification products of naturally occurring oils such as plant oils and other polyols such as propylene glycol and sorbitol.

The oils can have emulsifying properties which can be useful in a number of food contexts such as bread improvers compositions for example. Typically such emulsifying oils will contain mono-and/or di-glycerides, one particular example being diacetyl tartaric acid esters of monoglycerides.

Preferred oils are those in which the most prevalent fatty acid residues in the oil are derived from oleic acid or linoleic acid or hydrogenates or partial hydrogenates thereof, for example those in which at least 50% of the fatty acid residues in the carrier oil are oleic acid residues.

Oil that are currently particularly preferred include palm olein and rapeseed oil.

The oils used in the suspensions can be liquid or semi-solid at room temperature, and it is generally preferred that the oil is liquid at a temperature below 45 degrees C. One preferred oil is palm olefin.

In addition to, or instead of glycerides, the oils can contain fatty acid or medium or long chain carboxylic acid esters of other polyols such as propylene glycol, or sorbitol, or other sugars or sugar alcohols. Examples of sugar-derived oils include sucrose polyesters of long chain fatty acids such as the so-called "low calorie oils" and "zero-calorie oils" (Olestra), see for example US-A-3600186 and US-A-4005196.

The coating compositions of the invention are typically applied to a food item such as a snack food item by dipping, or tumbling, or spraying. For example, the suspension can be introduced into a tumbling vessel containing the food item by pumping from a reservoir or container (e.g. batch container), for example by means of a peristaltic pump. The suspension can be introduced into the container by tube feed as a liquid, or through a spray nozzle for example, or with the assistance of gas (e.g. air) pressure.

Where the oil base of the suspension is not liquid at room temperature, or where the viscosity characteristics (e.g. flowability) required for the coating process are not optimal at room temperature, the oil can be heated, e.g. to a temperature in the range from 45 degrees C to 50 degrees C in order to bring the oil into the required liquid state. However, in order to avoid the need to heat the oil, the oil base can be selected from oils which are liquid at room temperature, examples of such oils being rapeseed oil. The suspension can be maintained in a continuously stirred or agitated state (e.g. by high shear mixing) prior to discharge from the reservoir or storage vessel to the tumbling vessel.

The coating compositions of the invention have significantly improved adhesion characteristics compared to known coatings and an advantage of this is that the quantities of coating falling off of the surface of the food item during or after the coating operation are greatly reduced. Not only does this lead to a reduction in wastage but, moreover, the frequency with which production needs to be halted in order to clean the machinery and remove accreted coating materials is greatly reduced.

The adhesiveness of the coatings can be measured using the collet adhesion test as described in the Examples below. In the collet adhesion test, extruded hoop-shaped snackfood items (collets) are heated and coated using a measurable quantity of coating agent The proportion of the coating agent adhering to the collet can then be determined and this measurement can be used to define the adhesiveness of the coating. By means of the invention, it has been found possible to provide coating compositions having an adhesiveness, as measured by the collet adhesion test, of greater than 85%, for example greater than 90%.

In order to provide the desired particle size distribution and mean particle size, the components of the composition are preferably pre-blended or pre-mixed in the oil carrier and milled together to the required size.

It has unexpectedly been found that the method used to mill the components of the coating has a significant effect on the properties of the suspension. More particularly, it has been found that high shear milling methods give suspensions with relatively poor rheological properties and a tendency to separate after a relatively short period. In contrast, high impact low shear milling methods such as ball milling have been found to give suspensions that remain stable even after chilling for several weeks and which have better mouthfeel and taste characteristics. In a ball mill, the components are tumbled with beads or balls of a hard material such as steel, or a ceramic or mineral material such as agate or zirconia, the impact of the beads or balls on the particles serving to break them into smaller particles but with minimal shearing forces being exerted on the particles. It is therefore preferred that the coating composition of the invention are prepared using a low shear high impact milling method such as ball milling.

Accordingly, in a further aspect, the invention provides a method of preparing a liquid food composition (e.g. a coating composition) as hereinbefore defined, which method comprises mixing the components of the composition in the carrier liquid (e.g. carrier oil) and milling the mixture to give the suspension, preferably by means of a low shear high impact milling method such as ball milling.

In a still further aspect, the invention provides a food item (such as a snack food) coated with, or disposed in a liquid food composition (e.g. a coating composition) as hereinbefore defined.

In another aspect, the invention provides a method of coating a food item comprising dipping the foodstuff in, or spraying or tumbling the foodstuff with, a coating composition as hereinbefore defined.

### Brief Description of the Drawings

Figure 1 is a comparative graph showing the particle size distributions of three coating compositions, a first composition being a milled composition in accordance with the invention, a second composition representing a standard formulation and a third composition being an unmilled blend of solid ingredients.
Figure 2 is a graph showing the particle size distribution of the milled first composition in Figure 1
Figure 3 is a graph showing the particle size distribution of the standard formulation in Figure 1.
Figure 4 is a graph showing the particle size distribution of the unmilled blend composition in Figure 1

### Detailed Description of the Preferred Embodiments

The invention will now be illustrated in more detail by reference to the following non-limiting examples.

### EXAMPLE 1

### Preparation of a Cheese-flavoured Coating

A cheese flavoured coating composition suitable for coating extruded snackfoods of the collet type was prepared from the following ingredients:

| Ingredient | Concentration % (w/w) of total solids |
|---|---|
| cheese powder | 35 - 40 |
| whey powder | 35 - 40 |
| salt | 10-15 |
| monosodium glutamate | 0 - 5 |
| calcium phosphate | 0 - 5 |
| silica | 0 - 5 |
| spice extracts | 0 - 5 |
| sodium hexacyanoferrate | 0 - 5 . |
| (anti-caking agent) | |

The foregoing ingredients were dry blended and a quantity of the blend was mixed with a palm olein oil (melting point approx. 38 degrees C) to form a slurry containing approximately 30% solids. The slurry was then milled in a Dyno-Mill type KDL-A Ball Mill (available from Willy A. Bachofen AG Maschinenfabrik, Basel, Switzerland, or from Glen Creston Limited, Stanmore, Middlesex, England) using polyurethane agitator discs and zirconia (YTZ) grinding beads of Imm diameter. The conditions employed were as follows: peripheral disc speed 8.5, pressure 0 Bar, flow rate 8 litres per hour, inflow temperature ambient, and outflow temperature 34-39 degrees C.

The resulting suspension product had a smooth creamy consistency and an orange coloration. The suspension was left for several weeks at room temperature and only minimal settling was observed.

### COMPARISON OF THE MILLED SUSPENSION OF EXAMPLE 1 WITH NON-MILLED COMPOSITIONS

The properties of the milled composition described above were compared with the properties of the composition prior to milling and a second reference composition containing the same ingredients as the composition of Example 1 except that the whey powder contained particles of a greater particle size and a broader particle size distribution.

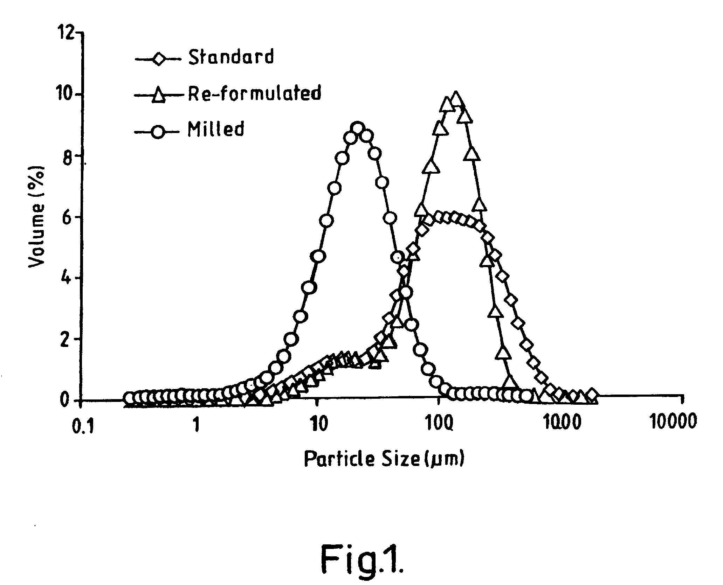

The three formulations were subjected to particle size analysis using a Malvem Mastersizer 2000 laser particle sizer. A comparison of the particle size distributions of the three formulations is shown in Figure 1, from which it is evident that the milled formulation of Example 1 has a much narrower particle size distribution and a lower mean particle size than the other two formulations.

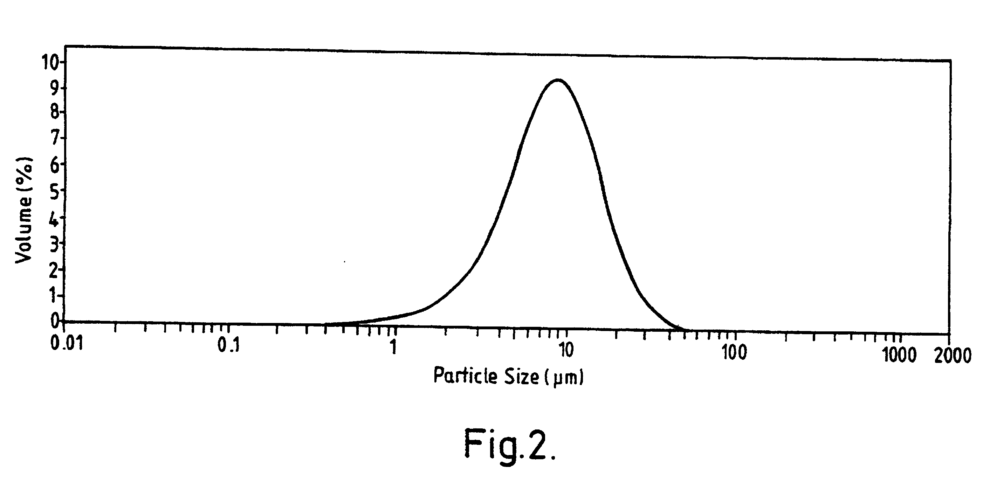

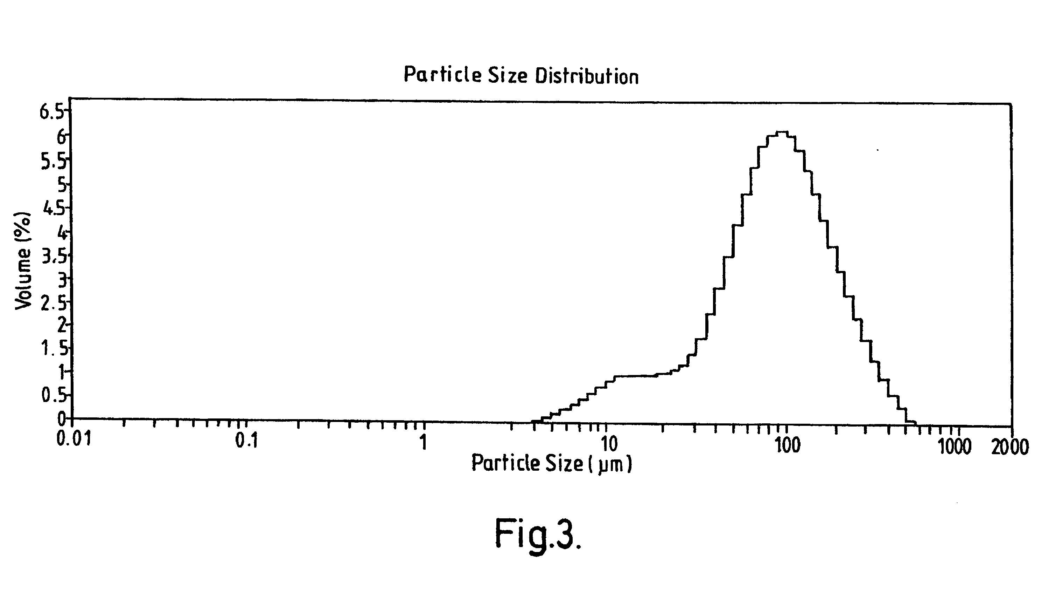

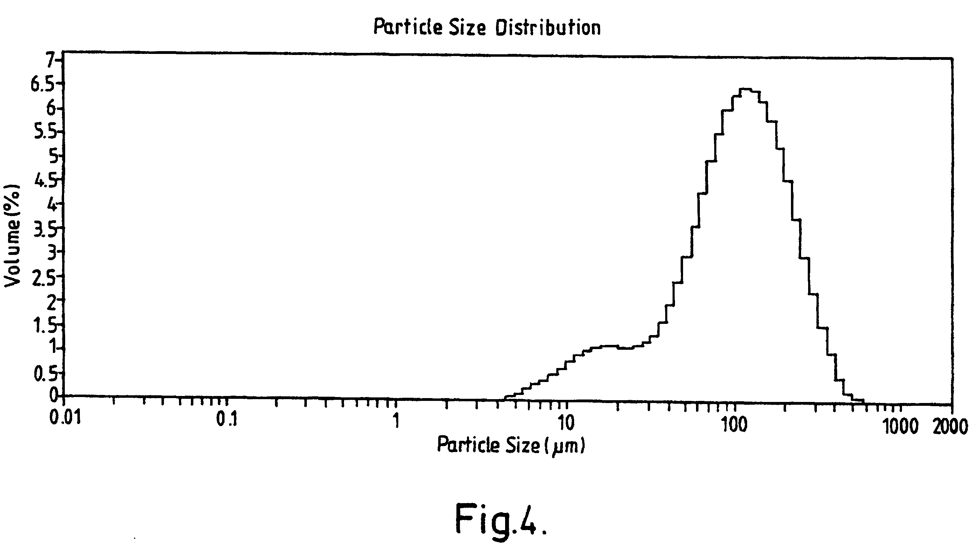

The individual particle size distribution graphs are shown in Figures 2,3 and 4, and the particle size distribution data are shown in Tables 2, 3 and 4.

In Table 5, the mean particle size, specific surface areas, and particle size distributions (d values) are compared.

As can be seen, the milled formulation has a much smaller mean particle diameter (10.017 *µ*m) than either of the unmilled formulations. Similarly, the particle size distributions, as represented by the d[0.12, d[0.5] and d[0.9] values are considerably smaller than for the unmilled formulations. It will also be noted that the particle size distribution exhibited by Example 1 is monomodal whereas in the two unmilled formulations, the distributions appear to be bimodal.

**TABLE 2**

| **PARTICLE SIZE DISTRIBUTION FOR MILLED FORMULATION OF EXAMPLE 1** | | | | | | | |
|---|---|---|---|---|---|---|---|
| **Size (µm)** | **Volume in %** | **Size (µm)** | **Volume in %** | **Size (µm)** | **Volume in %** | **Size (µm)** | **Volume in %** |
| 0.020 | 0.00 | 0.399 | 0.01 | 7.096 | 6.79 | 126.191 | 0.00 |
| 0.022 | 0.00 | 0.448 | 0.03 | 7.962 | 7.09 | 141.589 | 0.00 |
| 0.025 | 0.00 | 0.502 | 0.06 | 8.934 | 7.14 | 158.866 | 0.00 |
| 0.028 | 0.00 | 0.564 | 0.09 | 10.024 | 6.93 | 178.250 | 0.00 |
| 0.032 | 0.00 | 0.632 | 0.12 | 11.247 | 6.50 | 200.00 | 0.00 |
| 0.036 | 0.00 | 0.710 | 0.14 | 12.619 | 5.88 | 224.404 | 0.00 |
| 0.040 | 0.00 | 0.796 | 0.16 | 14.159 | 5.11 | 251.785 | 0.00 |
| 0.045 | 0.00 | 0.893 | 0.19 | 15.887 | 4.29 | 282.508 | 0.00 |
| 0.050 | 0.00 | 1.002 | 0.24 | 17.825 | 3.44 | 316.979 | 0.00 |
| 0.056 | 0.00 | 1.125 | 0.29 | 20.000 | 2.67 | 355.656 | 0.00 |
| 0.063 | 0.00 | 1.262 | 0.38 | 22.440 | 1.97 | 399.052 | 0.00 |
| 0.071 | 0.00 | 1.416 | 0.48 | 25.179 | 1.40 | 447.744 | 0.00 |
| 0.080 | 0.00 | 1.589 | 0.62 | 28.251 | 0.93 | 502,377 | 0.00 |
| 0.100 | 0.00 | 1.783 | 0.78 | 31.698 | 0.59 | 563.677 | 0.00 |
| 0.112 | 0.00 | 2.000 | 0.98 | 35.566 | 0.29 | 632.456 | 0.00 |
| 0.126 | 0.00 | 2.244 | 1.21 | 39.905 | 0.12 | 709.627 | 0.00 |
| 0.142 | 0.00 | 2.518 | 1.50 | 44.774 | 0.01 | 796.214 | 0.00 |
| 0.159 | 0.00 | 2.825 | 1.87 | 50.238 | 0.00 | 893.367 | 0.00 |
| 0.178 | 0.00 | 3.170 | 2.31 | 56.368 | 0.00 | 1002.374 | 0.00 |
| 0.200 | 0.00 | 3.557 | 2.85 | 63.246 | 0.00 | 1124.683 | 0.00 |
| 0.224 | 0.00 | 3.991 | 3.48 | 70.963 | 0.00 | 1261.915 | 0.00 |
| 0.252 | 0.00 | 4.477 | 4.19 | 79.621 | 0.00 | 1415.892 | 0.00 |
| 0.283 | 0.00 | 5.024 | 4.93 | 89.337 | 0.00 | 1588.656 | 0.00 |
| 0.317 | 0.00 | 5.637 | 5.65 | 100.237 | 0.00 | 1782.502 | 0.00 |
| 0.356 | 0.00 | 6.325 | 6.30 | 112.468 | 0.00 | 2000.00 | 0.00 |

**TABLES 3**

| **PARTICLE SIZE DISTRIBUTION FOR UNMILLED COMPOSITION OF EXAMPLE 1** | | | | | | | |
|---|---|---|---|---|---|---|---|
| **Size (µm)** | **Volume in %** | **Size (µm)** | **Volume in %** | **Size (µm)** | **Volume in %** | **Size (µm)** | **Volume in %** |
| 0.020 | 0.00 | 0.356 | 0.00 | 6.325 | 0.38 | 112.468 | 5.74 |
| 0.022 | 0.00 | 0.399 | 0.00 | 7.096 | 0.50 | 126.192 | 5.35 |
| 0.025 | 0.00 | 0.448 | 0.00 | 7.962 | 0.63 | 141.589 | 4.86 |
| 0.028 | 0.00 | 0.502 | 0.00 | 8.934 | 0.75 | 158.866 | 4.33 |
| 0.032 | 0.00 | 0.564 | 0.00 | 10.024 | 0.86 | 178.250 | 3.78 |
| 0.036 | 0.00 | 0.632 | 0.00 | 11.247 | 0.94 | 200.000 | 3.24 |
| 0.040 | 0.00 | 0.710 | 0.00 | 12.619 | 1.00 | 224.404 | 2.72 |
| 0.045 | 0.00 | 0.796 | 0.00 | 14.159 | 1.02 | 251.785 | 2.22 |
| 0.050 | 0.00 | 0.893 | 0.00 | 15.887 | 1.02 | 282.507 | 1.77 |
| 0.056 | 0.00 | 1.002 | 0.00 | 17.825 | 1.02 | 316.979 | 1.34 |
| 0.063 | 0.00 | 1.125 | 0.00 | 20.000 | 1.03 | 355.656 | 0.96 |
| 0.071 | 0.00 | 1.262 | 0.00 | 22.440 | 1.09 | 399.053 | 0.64 |
| 0.080 | 0.00 | 1.416 | 0.00 | 25.179 | 1.22 | 447.744 | 0.36 |
| 0.89 | 0.00 | 1.589 | 0.00 | 28.251 | 1.46 | 502.377 | 0.09 |
| 0.100 | 0.00 | 1.783 | 0.00 | 31.698 | 1.82 | 563.677 | 0.02 |
| 0.113 | 0.00 | 2.000 | 0.00 | 35.566 | 2.29 | 632.456 | 0.00 |
| 0.126 | 0.00 | 2.244 | 0.00 | 39.905 | 2.87 | 709.627 | 0.00 |
| 0.142 | 0.00 | 2.518 | 0.00 | 44.774 | 3.52 | 796.214 | 0.00 |
| 0.159 | 0.00 | 2.825 | 0.00 | 50.238 | 4.21 | 893.367 | 0.00 |
| 0.178 | 0.00 | 3.170 | 0.00 | 56.368 | 4.85 | 1002.375 | 0.00 |
| 0.200 | 0.00 | 3.557 | 0.00 | 63.246 | 5.41 | 1124.683 | 0.00 |
| 0.224 | 0.00 | 3.990 | 0.06 | 70.963 | 5.83 | 1261.915 | 0.00 |
| 0.252 | 0.00 | 4.477 | 0.10 | 79.621 | 6.07 | 1415.892 | 0.00 |
| 0.282 | 0.00 | 5.024 | 0.19 | 89.337 | 6.14 | 1588.657 | 0.00 |
| 0.317 | 0.00 | 5.637 | 0.27 | 100.237 | 6.02 | 1782.502 | 0.00 |
| | | | | | | 2000.00 | 0.00 |

**TABLE 4**

| **PARTICLE SIZE DISTRIBUTION OF STANDARD FORMULATION** | | | | | | | |
|---|---|---|---|---|---|---|---|
| **Size (µm)** | **Volume in %** | **Size (µm)** | **Volume in %** | **Size (µm)** | **Volume in %** | **Size (µm)** | **Volume in %** |
| 0.264 | 0.00 | 2.560 | 0.00 | 24.801 | 1.45 | 240.225 | 4.13 |
| 0.308 | 0.00 | 2.979 | 0.00 | 28.854 | 1.61 | 279.487 | 2.81 |
| 0.358 | 0.00 | 3.466 | 0.00 | 33.570 | 1.97 | 325.166 | 1.67 |
| 0.416 | 0.00 | 4.032 | 0.00 | 39.057 | 2.55 | 378.311 | 0.79 |
| 0.484 | 0.00 | 4.691 | 0.14 | 45.440 | 3.37 | 440.142 | 0.21 |
| 0.563 | 0.00 | 5.458 | 0.29 | 52.867 | 4.39 | 512.079 | 0.00 |
| 0.656 | 0.00 | 6.350 | 0.45 | 61.507 | 5.53 | 595.772 | 0.00 |
| 0.763 | 0.00 | 7.388 | 0.61 | 71.560 | 6.66 | 693.145 | 0.00 |
| 0.887 | 0.00 | 8.596 | 0.81 | 83.255 | 7.60 | 806.432 | 0.00 |
| 1.032 | 0.00 | 10.000 | 1.03 | 96.863 | 8.25 | 938.235 | 0.00 |
| 1.201 | 0.00 | 11.634 | 1.24 | 112.694 | 8.50 | 1091.579 | 0.00 |
| 1.397 | 0.00 | 13.536 | 1.39 | 131.112 | 8.32 | 1269.966 | 0.00 |
| 1.626 | 0.00 | 15.748 | 1.45 | 152.541 | 7.71 | 1477.551 | 0.00 |
| 1.892 | 0.00 | 18.322 | 1.44 | 177.472 | 6.73 | 1719.041 | 0.00 |
| 2.201 | 0.00 | 21.317 | 1.42 | 206.478 | 5.48 | 2000.00 | 0.00 |

**TABLE 5**

| **COMPARISON OF PARTICLE SIZE PARAMETERS** | | | | | |
|---|---|---|---|---|---|
| **Sample** | **Volume Weighted Mean (µm)** | **Specific Surface Area (m**^{**2**}**/g)** | **d[0.1] (µm)** | **d[0.5] (µm)** | **d[0.9] (µm)** |
| Example 1 Milled | 10.017 | 0.97922 | 3.317 | 8.549 | 18.634 |
| Example 1 Unmilled | 110.566 | 0.11917 | 22.996 | 88.650 | 225.478 |
| Comparison | 121.721 | 0.1071 | 24.061 | 105.495 | 237.400 |

### Determination of the Viscosities of the Suspensions

The three suspensions identified in Tables 2 to 5 above and described in Example 1 were subjected to viscosity analysis using a Brookfield DV-1 viscometer equipped with a number 2 spindle. The viscosities (calculated as an average over a five minute period) at a water bath temperature of 45 degrees C and a rotational speed of 100 rpm for the three formulations were as follows:

**Table 6**

| **Sample** | **Viscosity (mPas**^{**-1**}**)** |
|---|---|
| Example 1 - Milled | 31.017 |
| Example 1-Unmilled | 19.653 |
| Standard Formulation - Comparison | 18.678 |

Thus, as can be seen from the results above, the milled formulation of Example 1 exhibited much greater viscosity than the unmilled formulations.

The effects of milling the formulations, and the consequent smaller particle size and higher viscosity, on the adhesiveness of the suspension to snack food items was then determined as set out below.

### Determination of Adhesiveness of Suspension

### Collet Adhesion Test

The suspension formed by the method of Example 1 was subjected to the collet adhesion test to measure its adhesiveness in relation to standard snackfood collets.

### Test Protocol

Plain collets (74g) were weighed into a plastics bowl and heated at full power for 1.5 minutes in a microwave oven (Toshiba). The warmed collets were then transferred into a pre-weighed polyethylene bag (50 x 75 cm) and a quantity of the suspension of Example 1 was poured into the bag. The bag was inflated, closed and shaken for one minute. The coated collets were then tipped into a plastics bowl and weighed. The bag and residual coating in the bag were also weighed and the amount of residual coating remaining on the bag was determined.

The Adhesiveness (A) of the suspension is defined as the percentage of the suspension applied to the collets that remain on the collets after shaking. By means of this technique, the ball-milled composition is found to have considerably better adhesiveness than the unmilled composition or the standard composition.

### TEST COMPOSITIONS

### COMPARISON OF THE EFFECT OF DIFFERENT MILLING METHODS ON THE PROPERTIES OF THE SUSPENSIONS

Several different milling techniques were used to determine the effects of the milling technique upon the properties of the suspension. Three mixing/milling machines were employed, namely a Silverson Benchtop high shear mixer, an Urschel Comitrol High Shear mixer and a "Dyne-Mill" (Glen Creston) Ball Mill (as above).

The Silverson high shear mixer is widely used to mix, emulsify, homogenise, solubilise, suspend, disperse and disintegrate solids. The solid material undergoes a milling action as it is forced through specific screen sizes.

The Comitrol machine makes use of the principle of incremental shear and centrifugal force to ensure highly efficient comminution by rotating the product inside a stationary reduction head at high rotational speeds.

The Dyno-Mill Ball Mill machine makes use of high impact ball milling machine makes use of high impact ball milling using grinding beads (e.g. zirconia beads) balls having a bead diameter of 1mm.

The results ofthe comparative milling tests showed that the High Shear Silverson and Urschel machines produced samples with relatively poor rheological properties when using rape seed and palm olein oils.

Thus, although the milling produced a reduction in particle size distribution, and immediate formation of a suspension of the seasoning within the slurry, the slurry was found to be unstable over periods of more than ten minutes. Moreover, the high shear and friction generated using the Silverson and Urschel methods caused significant increases in temperature thereby possibly leading to rancidity and sensory problems. Furthermore, the samples gave a gritty mouthfeel, which could be due to fat crystallisation and inconsistent particle size reduction of the seasoning.

By comparison, the Dyno-Mill (Glen Creston) ball milling method produced suspensions which are stable at ambient and under chilled storage with no loss of suspension stability over a two week period. Moreover, the grittiness present in the two other trial formulations was not observed with ball milling method.

On the basis of the above results, it is concluded that the ball milling of the suspensions provides a more stable and more palatable coating than compositions milled/commuted by other means.

### EXAMPLE 2

### TOMATO SAUCE MIX

A tomato sauce mix is formed by mixing the following ingredients in water and milling the mixture using a Dyne-Mill ball mill as described in Example 1 to give a suspension having a similar particle size distribution.

| **Ingredient** | **Conc. Range (%)** | **Conc. Specific (%)** |
|---|---|---|
| sugar | 1.5 - 20 | 2.25 |
| salt | 0.5-10 | 1.35 |
| flavouring | 0 - 5 | 0.03 |
| pepper | 0 - 5 | 0.03 |
| starch | 0.1 - 1O | 1.125 |
| tomato powder | 0.1 - 50 | 6.885 |

### EXAMPLE 3

### HOT WATER THICKENING CHEESE SAUCE MIX

A cheese sauce mix is prepared by mixing the following ingredients in water and then milling the mixture in a Dyno-Mill ball mill as described in Example 1.

| **Ingredient** | **Conc**. **Range (%)** | **Conc. Specific (%)** |
|---|---|---|
| milk powder | 0.1-15 | 2.325 |
| fat powder | 0.1-15 | 2.1 |
| salt | 0-5 | 0.675 |
| yeast | 0-5 | 0.075 |
| pepper | 0 - 5 | 0.03 |
| turmeric | 0 - 5 | 0.075 |
| garlic powder | 0-5 | 0.075 |
| mustard flour | 0 - 5 | 0.075 |
| flavour | 0 - 5 | 0.375 |
| flour | 0 - 5 | 0.15 |
| whey powder | 0-7 | 0.9 |
| processing aid | 0 - 6 | 0.3 |
| cheese powder | 0-15 | 3.555 |
| starch | 0-15 | 3.81 |

### EXAMPLE 4

### BREAD IMPROVER MIX

A bread improver mix is prepared by mixing the following ingredients with a liquid emulsifier base and then milling the mixture using a Dyno-Mill ball mill as described in Example 1. The resulting suspension remains stable for prolonged periods without settling.

| **Ingredient** | **Concentration** (%) |
|---|---|
| enzyme (e.g. amylase) | 1 - 10 |
| ascorbic acid | 1-10 |
| emulsifier (E-472e) | q.s. to 100 |

In the above formulation, the liquid emulsifier comprises diacetyl tartaric acid esters of monoglycerides and is sufficiently liquid to give the required flow properties in use. For emulsifiers having a higher viscosity, oils such as vegetable oils can be added to thin the liquid to the desired viscosity.

It will readily be apparent that numerous modifications and alterations could be made to the compositions described in the Examples, without departing from the principles underlying the invention, and all such modifications and alterations are intended to be embraced by this Application.

## Claims

1. A liquid food composition in the form of a suspension of particles of foodstuff in a carrier liquid, excluding sugar-in-oil suspensions and nut pastes and nut butters; the particles having a mean particle size of less than 100 micrometres and a particle size distribution whereby the d[0.5] value is less than 100 micrometres and the d[0.9] value is less than 300 micrometres.

2. A liquid food composition according to claim 1 **characterised in that** the carrier liquid is an oil.

3. A liquid food composition according to claim 1 or claim 2 which is selected from functional food suspensions such as drinks, sauces, glazes, bread improver compositions, bouillons, marinades and custards, yield improvers, phosphate suspensions, functional protein suspensions, coating suspensions, preservatives, colouring agents and colouring systems, and batters.

4. A liquid food composition as claimed in claim 2 which is a coating composition for coating a food item.

5. A liquid food composition as claimed in claim 4 **characterised in that** the particles have a mean particle size of less than 50 micrometres, the composition having a solids content of from 20% to 49% (w/w) and containing a free-flow enhancing agent.

6. A liquid food composition according to claim 5 **characterised in that** the free-flow enhancing agent is a phosphate such as calcium phosphate.

7. A liquid food composition according to any one of the preceding claims **characterised in that** the particle size distribution such that the d[0.9] value is less than 250 micrometres, for example less than 200 micrometres.

8. A liquid food composition according to any one of claims 1 to 4 **characterised in that** the mean particle size is less than 50 micrometres (for example less than 20 micrometres, preferably less than 15 micrometres) and the particle size distribution is such that the d[0.5] value is less than 20 micrometres.

9. A liquid food composition according to any one of claims 5 to 8 **characterised in that** the d[0.9] value is less than 50 micrometres.

10. A liquid food composition according to any one of claims 5 to 9 **characterised in that** the d[0.1] value is less than 10 micrometres.

11. A liquid food composition according to claim 7 **characterised in that** the particle size distribution is such that the d[0.1] value is less than 8 micrometres, the d[0.5] value is less than 15 micrometres and the d[0.9] value is less than 25 micrometres.

12. A liquid food composition according to claim 8 **characterised in that** the particle size distribution is such that the d[0.1] value is less than 5 micrometres, the d[0.5] value is less than 10 micrometres and the d[0.9] value is less than 20 micrometres.

13. A liquid food composition according to any one of the preceding claims **characterised in that** the particle size distribution is monomodal.

14. A liquid food composition according to any one of the preceding claims **characterised by** a viscosity in the range from 30 mPas⁻¹ to 200 mPas⁻¹ (e.g. 50 - 100).

15. A liquid food composition according to any one of the preceding claims **characterised in that** it is a coating composition comprising or consisting essentially of flavouring or seasoning components and optionally diluents or carriers therefor.

16. A liquid food composition according to claim 15 **characterised in that** the flavouring or seasoning components comprise one or more selected from base materials, flavoured base materials, processing aids, acidic base materials, flavours, herbs and spices, flavour enhancers, colours, and artificial sweeteners.

17. A liquid food composition according to any one of the preceding claims **characterised in that** the liquid carrier is liquid at a temperature below 45 degrees C.

18. A liquid food composition according to claim 17 **characterised in that** the liquid carrier is liquid at a temperature below 30 degrees C.

19. A liquid food composition according to any one of the preceding claims **characterised in that** the components of the composition have been milled together to give the said mean particle size and particle size distribution.

20. A liquid food composition according to claim 19 **characterised in that** the said components have been milled to give the said mean particle size and particle size distribution using a low shear high impact milling method.

21. A liquid food composition according to claim 20 **characterised in that** the said components have been milled together in a ball mill.

22. A liquid food composition according to any one of claims 4 to 21 **characterised in that** it is substantially free from nuts or nut-derived ingredients.

23. A liquid food composition according to any one of claims 4 to 22 , **characterised by** having an adhesiveness, measured by the collet adhesion test described herein, of greater than 85%, for example greater than 90%.

24. A liquid food composition according to any one of the preceding claims **characterised in that** the solids content is of the order of approximately 15% to 55% (w/w), for example from 20% to 49% (w/w), preferably from 25% to 35%, e.g. approximately 30% (w/w).

25. A liquid food composition according to any one of the preceding claims **characterised in that** the carrier liquid is an oil selected from palm olein and rapeseed oil.

26. A liquid food composition according to any one of the preceding claims **characterised in that** it is a bread improver composition.

27. A liquid food composition according to claim 26 **characterised in that** it comprises a bread improving agent suspended in an emulsifying oil.

28. A liquid food composition according to claim 27 **characterised in that** the emulsifying oil comprises a liquid emulsifier and optionally a vegetable oil.

29. A liquid food composition according to claim 27 or claim 28 **characterised in that** the bread improving agent comprises ascorbic acid and optionally an enzyme such as an amylase.

30. A method of preparing a liquid food composition as defined in any one of the preceding claims, which method comprises mixing the components of the composition in the carrier liquid and milling the mixture to give the suspension.

31. A method according to claim 30 **characterised in that** the milling of the mixture is effected by means of a low shear high impact milling method.

32. A method according to claim 31 **characterised in that** the milling method is ball milling.

33. A food item coated with a composition according to any one of claims 1 to 25.

34. A food item according to claim 33 which is a snack food.

35. A method of preparing a food item as claimed in claim 33 or 34 comprising dipping a foodstuff in, or tumbling or spraying a foodstuff with, a liquid food composition as defined in any one of claims 1 to 25.

## Patentansprüche

1. Flüssignahrungsmittel-Zusammensetzung in der Form einer Suspension aus Nahrungsmittelpartikeln in einer Trägerflüssigkeit, ausschließlich Zucker-in-Öl-Suspensionen und Nusspasten und Nussbutter, wobei die Partikel eine mittlere Partikelgröße von weniger als 100 Mikrometer und eine Partikelgrößenverteilung aufweisen, wodurch der d[0,5]-Wert weniger als 100 Mikrometer und der d[0,9]-Wert weniger als 300 Mikrometer ist.

2. Flüssignahrungsmittel-Zusammensetzung nach Anspruch 1, **dadurch gekennzeichnet, dass** die Trägerflüssigkeit ein Öl ist.

3. Flüssignahrungsmittel-Zusammensetzung nach Anspruch 1 oder 2, die aus funktionellen Nahrungsmittelsuspensionen, wie zum Beispiel Getränken, Soßen, Glasuren, Backhilfsmittel-Zusammensetzungen, Bouillons, Marinaden und Vanillesoßen, Ausbeuteverbesserern, Phosphatsuspensionen, funktionellen Proteinsuspensionen, Überzugssuspensionen, Konservierungsmitteln, Farbstoffen und Farbstoff-Systemen und Ausbackteigen ausgewählt ist.

4. Flüssignahrungsmittel-Zusammensetzung nach Anspruch 2, die eine Überzugszusammensetzung zum Überziehen eines Nahrungsmittelartikels darstellt.

5. Flüssignahrungsmittel-Zusammensetzung nach Anspruch 4, **dadurch gekennzeichnet, dass** die Partikel eine mittlere Partikelgröße von weniger als 50 Mikrometer aufweisen, wobei die Zusammensetzung einen Feststoffgehalt von 20 % bis 49 *%* (G/G) aufweist und einen freifließenden Geschmacksverstärker aufweist.

6. Flüssignahrungsmittel-Zusammensetzung nach Anspruch 5, **dadurch gekennzeichnet, dass** der freifließende Geschmacksverstärker ein Phosphat, wie zum Beispiel Calciumphosphat ist.

7. Flüssignahrungsmittel-Zusammensetzung nach einem der vorangehenden Ansprüche, **dadurch gekennzeichnet, dass** die Partikelgrößenverteilung dergestalt ist, dass der d[0,9]-Wert weniger als 250 Mikrometer, zum Beispiel weniger als 200 Mikrometer ist.

8. Flüssignahrungsmittel-Zusammensetzung nach einem der Ansprüche 1 bis 4, **dadurch gekennzeichnet, dass** die mittlere Partikelgröße weniger als 50 Mikrometer (zum Beispiel weniger als 20 Mikrometer, bevorzugt weniger als 15 Mikrometer) ist und die Partikelgrößenverteilung dergestalt ist, dass der d[0,5]-Wert weniger als 20 Mikrometer ist.

9. Flüssignahrungsmittel-Zusammensetzung nach einem der Ansprüche 5 bis 8, **dadurch gekennzeichnet, dass** der d[0,9]-Wert weniger als 50 Mikrometer ist.

10. Flüssignahrungsmittel-Zusammensetzung nach einem der Ansprüche 5 bis 9, **dadurch gekennzeichnet, dass** der d[0,1]-Wert weniger als 10 Mikrometer ist.

11. Flüssignahrungsmittel-Zusammensetzung nach Anspruch 7, **dadurch gekennzeichnet, dass** die Partikelgrößenverteilung dergestalt ist, dass der d[0,1]-Wert weniger als 8 Mikrometer, der d[0,5]-Wert weniger als 15 Mikrometer und der d[0,9]-Wert weniger als 25 Mikrometer ist.

12. Flüssignahrungsmittel-Zusammensetzung nach Anspruch 8, **dadurch gekennzeichnet, dass** die Partikelgrößenverteilung dergestalt ist, dass der d[0,1]-Wer weniger als 5 Mikrometer, der d[0,5]-Wert weniger als 10 Mikrometer und der d[0,9]-Wert weniger als 20 Mikrometer ist.

13. Flüssignahrungsmittel-Zusammensetzung nach einem der vorangehenden Ansprüche, **dadurch gekennzeichnet, dass** die Partikelgrößenverteilung monomodal ist.

14. Flüssignahrungsmittel-Zusammensetzung nach einem der vorangehenden Ansprüche, **gekennzeichnet durch** eine Viskosität in dem Bereich von 30 mPas⁻¹ bis 200 mPas⁻¹ (z.B. 50 -100).

15. Flüssignahrungsmittel-Zusammensetzung nach einem der vorangehenden Ansprüche, **dadurch gekennzeichnet, dass** sie eine Überzugszusammensetzung darstellt, die im Wesentlichen Geschmacks- oder Gewürzkomponenten und optional Verdünnungsmittel oder Träger dafür umfasst oder daraus besteht.

16. Flüssignahrungsmittel-Zusammensetzung nach Anspruch 15, **dadurch gekennzeichnet, dass** die Geschmacks- oder Gewürzkomponenten eine oder mehrere aus Basismaterialien, aromatisierten Basismaterialien, Verarbeitungshilfsmitteln, sauren Basismaterialien, Geschmacksstoffen, Kräutem und Gewürzen, Geschmacksverstärkerri, Farbstoffen und künstlichen Süßstoffen ausgewählt umfassen.

17. Flüssignahrungsmittel-Zusammensetzung nach einem der vorangehenden Ansprüche, **dadurch gekennzeichnet, dass** der flüssige Träger bei einer Temperatur unter 45 °C flüssig ist.

18. Flüssignahrungsmittel-Zusammensetzung nach Anspruch 17, **dadurch gekennzeichnet, dass** der flüssige Träger bei einer Temperatur unter 30 °C flüssig ist.

19. Flüssignahrungsmittel-Zusammensetzung nach einem der vorangehenden Ansprüche, **dadurch gekennzeichnet, dass** die Komponenten der Zusammensetzung zusammen gemahlen wurden, um die genannte mittlere Partikelgröße und Partikelgrößenverteilung zu ergeben.

20. Flüssignahrungsmittel-Zusammensetzung nach Anspruch 19, **dadurch gekennzeichnet, dass** die genannten Komponenten gemahlen wurden, um die genannte mittlere Partikelgröße und Partikelgrößenverteilung unter Verwendung eines Mählverfahrens bei niedriger Scherung und hohem Aufprall zu ergeben.

21. Flüssignahrungsmittel-Zusammensetzung nach Anspruch 20, **dadurch gekennzeichnet, dass** die genannten Komponenten zusammen in einer Kugelmühle gemahlen wurden.

22. Flüssignahrungsmittel-Zusammensetzung nach einem der Ansprüche 4 bis 21, **dadurch gekennzeichnet, dass** sie weitgehend frei von Nüssen oder sich von Nüssen herleitenden Bestandteilen ist.

23. Flüssignahrungsmittel-Zusammensetzung nach einem der Ansprüche 4 bis 22, **dadurch gekennzeichnet, dass** sie eine Adhäsivität, gemessen durch den hierin beschriebenen Ring-Adhäsionstest von größer als 85 %, zum Beispiel größer als 90 % aufweist.

24. Flüssignahrungsmittel-Zusammensetzung nach einem der vorangehenden Ansprüche, **dadurch gekennzeichnet, dass** der Feststoffgehalt in der Größenordnung von ca. 15 % bis 55 % (G/G), zum Beispiel von 20 % bis 49 % (G/G), bevorzugt von 25 % bis 35 %, z. B. ca. 30 % (G/G) liegt.

25. Flüssignahrungsmittel-Zusammensetzung nach einem der vorangehenden Ansprüche, **dadurch gekennzeichnet, dass** die Trägerflüssigkeit ein Öl, ausgewählt aus Palmolein und Rapsöl ist.

26. Flüssignahrungsmittel-Zusammensetzung nach einem der vorangehenden Ansprüche, **dadurch gekennzeichnet, dass** sie eine Backhilfsmittel-Zusammensetzung ist.

27. Flüssignahrungsmittel-Zusammensetzung nach Anspruch 26, **dadurch gekennzeichnet, dass** sie ein Backhilfsmittel, suspendiert in einem Emulsionsöl umfasst.

28. Flüssignahrungsmittel-Zusammensetzung nach Anspruch 27, **dadurch gekennzeichnet, dass** das Emulsionsöl einen flüssigen Emulgator und optional ein Pflanzenöl umfasst.

29. Flüssignahrungsmittel-Zusammensetzung nach Anspruch 27 oder 28, **dadurch gekennzeichnet, dass** das Backhilfsmittel Ascorbinsäure und optional ein Enzym, wie zum Beispiel eine Amylase, umfasst.

30. Verfahren zum Herstellen einer Flüssignahrungsmittel-Zusammensetzung nach einem der vorangehenden Ansprüche, welches Verfahren das Mischen der Komponenten der Zusammensetzung in der Trägerflüssigkeit und Mahlen des Gemisches umfasst, um die Suspension zu ergeben.

31. Verfahren nach Anspruch 30, **dadurch gekennzeichnet, dass** das Mahlen des Gemisches mittels eines Mahlverfahrens bei niedriger Scherung und hohem Aufprall bewirkt wird.

32. Verfahren nach Anspruch 31, **dadurch gekennzeichnet, dass** das Mahlverfahren Mahlen in einer Kugelmühle darstellt.

33. Nahrungsmittelartikel überzogen mit einer Zusammensetzung nach einem der Ansprüche 1 bis 25.

34. Nahrungsmittelartikel nach Anspruch 33, der ein Snack-Nahrungsmittel darstellt.

35. Verfahren zum Herstellen eines Nahrungsmittelartikels nach Anspruch 33 oder 34, umfassend das Eintauchen eines Nahrungsmittels in eine oder Trommeln oder Sprühen eines Nahrungsmittels mit einer Flüssignahrungsmittel-Zusammensetzung nach einem der Ansprüche 1 bis 25.

## Revendications

1. Composition alimentaire liquide sous la forme d'une suspension de particules d'aliment dans un véhicule liquide, à l'exception des suspensions sucre-dans-huile et des pâtes de noix et des beurres de noix ; les particules ayant une taille de particules moyenne inférieure à 100 micromètres et une distribution de taille de particules par quoi la valeur de d[0,5] est inférieure à 100 micromètres et la valeur de d[0,9] est inférieure à 300 micromètres.

2. Composition alimentaire liquide selon la revendication 1, **caractérisée en ce que** le véhicule liquide est une huile.

3. Composition alimentaire liquide selon la revendication 1 ou la revendication 2, qui est choisie parmi les suspensions alimentaires fonctionnelles telles que les boissons, les sauces, les produits de glaçage, les compositions d'amélioration de la fermentation, les bouillons, les marinades et les crèmes pâtissières, les améliorateurs de rendement, les suspensions de phosphate, les suspensions de protéines fonctionnelles, les suspensions d'enrobage, les conservateurs, les agents colorants et les systèmes colorants, et les pâtes à frire.

4. Composition alimentaire liquide selon la revendication 2, qui est une composition d'enrobage pour enrober un article alimentaire.

5. Composition alimentaire liquide selon la revendication 4, **caractérisée en ce que** les particules ont une taille de particules moyenne inférieure à 50 micromètres, la composition ayant une teneur en matières solides allant de 20% à 49% (en poids/poids) et contenant un agent fluidifiant.

6. Composition alimentaire liquide selon la revendication 5, **caractérisée en ce que** l'agent fluidifiant est un phosphate tel que le phosphate de calcium.

7. Composition alimentaire liquide selon l'une quelconque des revendications précédentes, **caractérisée en ce que** la distribution de taille de particules est telle que la valeur de d[0,9] est inférieure à 250 micromètres, par exemple inférieure à 200 micromètres.

8. Composition alimentaire liquide selon l'une quelconque des revendications 1 à 4, **caractérisée en ce que** la taille de particules moyenne est inférieure à 50 micromètres (par exemple inférieure à 20 micromètres, préférablement inférieure à 15 micromètres) et la distribution de taille de particules est telle que la valeur de d[0,5] est inférieure à 20 micromètres.

9. Composition alimentaire liquide selon l'une quelconque des revendications 5 à 8, **caractérisée en ce que** la valeur de d[0,9] est inférieure à 50 micromètres.

10. Composition alimentaire liquide selon l'une quelconque des revendications 5 à 9, **caractérisée en ce que** la valeur de d[0,1] est inférieure à 10 micromètres.

11. Composition alimentaire liquide selon la revendication 7, **caractérisée en ce que** la distribution de taille de particules est telle que la valeur de d[0,1] est inférieure à 8 micromètres, la valeur de d[0,5] est inférieure à 15 micromètres et la valeur de d[0,9] est inférieure à 25 micromètres.

12. Composition alimentaire liquide selon la revendication 8, **caractérisée en ce que** la distribution de taille de particules est telle que la valeur de d[0,1] est inférieure à 5 micromètres, la valeur de d[0,5] est inférieure à 10 micromètres et la valeur de d[0,9] est inférieure à 20 micromètres.

13. Composition alimentaire liquide selon l'une quelconque des revendications précédentes, **caractérisée en ce que** la distribution de taille de particules est monomodale.

14. Composition alimentaire liquide selon l'une quelconque des revendications précédentes, **caractérisée par** une viscosité dans la plage allant de 30 mPas⁻¹ à 200 mpas⁻¹ (par exemple 50-100).

15. Composition alimentaire liquide selon l'une quelconque des revendications précédentes, **caractérisée en ce qu'**il s'agit d'une composition d'enrobage comprenant, ou étant essentiellement constituée par, des composants aromatisants ou d'assaisonnement, et éventuellement des diluants ou des véhicules pour ceux-ci.

16. Composition alimentaire liquide selon la revendication 15, **caractérisée en ce que** les composants aromatisants ou d'assaisonnement comprennent un ou plusieurs choisis parmi les matériaux de base, les matériaux de base aromatisés, les adjuvants de fabrication, les matériaux de base acides, les arômes, les fines herbes et les épices, les exhausteurs d'arôme, les colorants et les édulcorants artificiels.

17. Composition alimentaire liquide selon l'une quelconque des revendications précédentes, **caractérisée en ce que** le véhicule liquide est liquide à une température inférieure à 45°C.

18. Composition alimentaire liquide selon la revendication 17, **caractérisée en ce que** le véhicule liquide est liquide à une température inférieure à 30°C.

19. Composition alimentaire liquide selon l'une quelconque des revendications précédentes, **caractérisée en ce que** les composants de la composition ont été broyés ensemble pour donner lesdites taille de particules moyenne et distribution de taille de particules.

20. Composition alimentaire liquide selon la revendication 19, **caractérisée en ce que** lesdits composants ont été broyés pour donner lesdites taille de particules moyenne et distribution de taille de particules à l'aide d'une méthode de broyage à cisaillement faible et à impact élevé.

21. Composition alimentaire liquide selon la revendication 20, **caractérisée en ce que** lesdits composants ont été broyés ensemble dans un broyeur à boulets.

22. Composition alimentaire liquide selon l'une quelconque des revendications 4 à 21, **caractérisée en ce qu'**elle est sensiblement dépourvue de noix ou d'ingrédients dérivés de noix.

23. Composition alimentaire liquide selon l'une quelconque des revendications 4 à 22, **caractérisée** comme ayant une adhésivité, mesurée par le test d'adhésion des extrudats annulaires alimentaires [collets] décrit dans ce texte, supérieure à 85%, par exemple supérieure à 90%.

24. Composition alimentaire liquide selon l'une quelconque des revendications précédentes, **caractérisée en ce que** la teneur en matières sèches est de l'ordre d'environ 15% à 55% (en poids/poids), par exemple de 20% à 49% (en poids/poids), préférablement de 25% à 35%, par exemple d'environ 30% (en poids/poids).

25. Composition alimentaire liquide selon l'une quelconque des revendications précédentes, **caractérisée en ce que** le véhicule liquide est une huile choisie parmi l'oléine de palme et l'huile de colza.

26. Composition alimentaire liquide selon l'une quelconque des revendications précédentes, **caractérisée en ce qu'**il s'agit d'une composition d'amélioration de fermentation.

27. Composition alimentaire liquide selon la revendication 26, **caractérisée en ce qu'**elle comprend un agent d'amélioration de fermentation en suspension dans une huile émulsifiante.

28. Composition alimentaire liquide selon la revendication 27, **caractérisée en ce que** l'huile émulsifiante comprend un émulsifiant liquide et éventuellement une huile végétale.

29. Composition alimentaire liquide selon la revendication 27 ou la revendication 28, **caractérisée en ce que** l'agent d'amélioration de fermentation comprend de l'acide ascorbique et éventuellement une enzyme telle qu'une amylase.

30. Méthode de préparation d'une composition alimentaire liquide telle que définie selon l'une quelconque des revendications précédentes, laquelle méthode comprend le mélange des composants de la composition dans le véhicule liquide et le broyage du mélange pour donner la suspension.

31. Méthode selon la revendication 30, **caractérisée en ce que** le broyage du mélange est effectué au moyen d'une méthode de broyage à cisaillement faible et à impact élevé.

32. Méthode selon la revendication 31, **caractérisée en ce que** la méthode de broyage est un broyage à boulets.

33. Article alimentaire enrobé d'une composition selon l'une quelconque des revendications 1 à 25.

34. Article alimentaire selon la revendication 33, qui est un en-cas alimentaire.

35. Méthode de préparation d'un article alimentaire selon la revendication 33 ou 34, comprenant le trempage d'un aliment dans, ou par application au tonneau ou par pulvérisation d'un aliment par, une composition alimentaire liquide telle que définie selon l'une quelconque des revendications 1 à 25.
